# DEMANDE DE BREVET EUROPEEN

(11) **EP 1 213 210 A1**
(43) Date de publication de la demande: **12.06.2002**
(21) Numéro de dépôt: 01403174.4
(22) Date de dépôt: 07.12.2001
(51) Int. Cl.: B62D 33/02, B60P 1/28

(54) **Procédé de fabrication d'un caisson ouvert arrondi, véhicule industriel comportant un tel caisson et procédé de fabrication d'un tel véhicule industriel**

(30) Priorité: 08.12.2000 FR 0016031
(71) Demandeur: General Trailers France, 91130 Ris Orangis (FR)
(72) Inventeur: Delepiere, Christophe, 59480 La Bassee (FR)
(74) Mandataire: Catherine, Alain

(57) **Abrégé**

L'invention concerne un procédé de fabrication d'un caisson ouvert arrondi pour un véhicule industriel caractérisé par les étapes:
- assemblage de plusieurs tôles (4-9) pour en former une enveloppe (1) ayant un axe longitudinal (2) et deux extrémités ouvertes,
- fermeture de l'une au moins des extrémités de l'enveloppe par fixation d'une coupelle (10) sur cette extrémité,
   fixation d'au moins une paire d'éléments de montage (11, 12) sur l'enveloppe cylindrique dans des positions symétriques par rapport à un plan médian (11) de l'enveloppe (1) passant par l'axe longitudinal (2) de l'enveloppe,
- sectionnement de l'enveloppe (1) et de la coupelle (10) le long du plan médian (1) pour obtenir deux unités indépendantes (2, 3) constituant alors deux caissons ouverts arrondis.

L'invention concerne également un véhicule industriel comportant un tel caisson et un procédé de fabrication d'un tel véhicule industriel.

## Description

L'invention concerne un procédé de fabrication d'un caisson ouvert arrondi, un véhicule industriel comportant un tel caisson ouvert arrondi et un procédé de fabrication d'un tel véhicule industriel.

Le terme " caisson ouvert arrondi " désigne, dans le cadre de la présente invention, tout type de caisson ouvert ayant une forme allongée et dont la section transversale par rapport à son étendue longitudinale, est exempte d'angles. Un exemple en est un caisson ouvert semi-cylindrique dont la section transversale correspond à un demi-cercle, la moitié d'une ellipse ou la moitié d'une figure géométrique se situant entre un rectangle et un cercle.

Le terme " caisson ouvert arrondi " désigne par ailleurs également tout type de caisson ouvert dont la section transversale, exempte d'angles, n'est pas constante sur toute l'étendue longitudinale, mais varie de manière linéaire ou de manière non linéaire. Un exemple de caisson avec variation linéaire de sa section transversale est un caisson semi-tronconique et un exemple de caisson avec variation non linéaire est un caisson ayant un fond étagé.

Alors que la fabrication de caissons ayant des parois essentiellement planes peut être considérée comme simple du fait que le fond et les parois latérales du caisson peuvent être préparés séparément et assemblés à l'aide d'éléments angulaires, il n'en est pas de même lors de la fabrication de ce qui est appelé dans le cadre de la présente invention, un caisson ouvert arrondi.

En effet, l'absence de parois planes et notamment l'absence de jonctions angulaires entre le fond et les parois et entre les parois elles-mêmes, entraîne au moins deux difficultés. La première difficulté tient au fait qu'une paroi en courbe est plus difficile à fabriquer et à manutentionner qu'une paroi plane. La deuxième difficulté tient au fait qu'il est plus difficile de déplacer un outil de soudage dans un volume que dans un plan.

Le but de l'invention est d'indiquer une solution qui permette d'obtenir un caisson ouvert arrondi et un véhicule industriel comportant un tel caisson, remédiant aux problèmes énoncés ci-avant.

Le but de l'invention est atteint par un procédé de fabrication d'un caisson ouvert arrondi pour un véhicule industriel, qui comprend les étapes suivantes:
former une enveloppe ayant un axe longitudinal et deux extrémités ouvertes,
fermer au moins une des extrémités de l'enveloppe par fixation d'une coupelle, sur cette extrémité,
fixer au moins une paire d'éléments de montage sur l'enveloppe dans des positions symétriques par rapport à un plan médian de l'enveloppe passant par l'axe longitudinal de l'enveloppe, et
sectionner l'enveloppe et la coupelle le long du plan médian pour obtenir deux unités indépendantes constituant alors deux caissons ouverts arrondis.

L'invention repose sur le principe de l'obtention d'un caisson ouvert arrondi par le détour de la fabrication d'un corps fermé arrondi constituant une paire de caissons ouverts disposés tête-bêche symétriquement par rapport à un plan médian. En d'autres termes, pour obtenir par exemple un caisson ouvert semi-cylindrique, on forme d'abord un corps cylindrique et on le coupe ensuite en deux dans le sens de sa longueur.

L'enveloppe constituant le corps fermé peut être formée à partir d'une seule tôle ou à partir de deux ou plusieurs tôles. Quel que soit le nombre de tôles utilisées, la tôle ou chacune des tôles est soumise d'abord à une étape de cintrage lors de laquelle on lui donne une courbure avec un rayon prédéterminé selon la forme que l'on souhaite donner au caisson à obtenir. Le cintrage peut être effectué dans une rouleuse; mais il peut également être effectué par hydroformage, par déformation pneumatique ou par déformation par explosion.

Le détour de fabrication selon l'invention apporte les avantages suivants:
un corps fermé, c'est-à-dire un corps cylindrique ou tout autre corps ayant une enveloppe entourant entièrement un axe longitudinal du corps, est plus stable et donc plus facile à manutentionner qu'un corps semi-cylindrique ou tout autre corps dont l'enveloppe n'entoure pas entièrement l'axe longitudinal;
un corps fermé permet l'utilisation d'un outillage automatique non seulement dans le sens longitudinal du corps mais également dans un sens transversal périphérique; certains travaux prennent relativement moins de temps en faisant un tour complet que de faire deux moitiés d'un tel tour; et
le présent procédé de fabrication permet d'utiliser en grande partie l'outillage destiné initialement uniquement à la fabrication de citernes, apportant ainsi l'avantage d'une meilleure exploitation de cet outillage et une contribution à la diversification des produits pouvant être fabriqués avec les installations de fabrication correspondantes.

L'invention concerne également les caractéristiques ci-après considérées isolément ou selon toutes leurs combinaisons techniquement possibles:
L'enveloppe est obtenue par assemblage de plusieurs tôles.
Lorsque l'enveloppe cylindrique ne peut être réalisée avec une tôle unique, on peut la constituer, par exemple, avec deux tôles formant deux enveloppes semi-cylindriques.
Les tôles sont disposées en deux groupes de part et d'autre du plan médian; ces deux groupes correspondent aux deux unités et donc aux deux caissons à obtenir; les deux groupes sont disposés de façon qu'aucune tôle ne passe par le plan médian de l'enveloppe cylindrique.
Cette disposition concerne principalement les modes de réalisation selon lesquels l'enveloppe est formée avec au moins quatre tôles. On dispose les tôles alors de façon que deux paires de tôles se joignent bout à bout au plan médian. Cette disposition est avantageuse dans le sens que le plan médian correspond au plan de coupe pour le sectionnement de l'enveloppe. Les tôles jointives le long de ce plan peuvent être fixées l'une à l'autre par des moyens provisoires, suffisamment forts pour tenir les tôles, mais simples à défaire.
L'enveloppe est obtenue par assemblage, pour chacune des deux unités à obtenir, d'une tôle de fond avec deux tôles latérales en chevauchement de part et d'autre de la tôle de fond, les tôles latérales de l'une des unités étant adjacentes aux tôles latérales correspondantes de l'autre partie le long du plan médian de l'enveloppe cylindrique.
Les tôles correspondantes des deux unités, qui sont adjacentes au plan médian de l'enveloppe cylindrique, sont attachées les unes aux autres par des soudures ponctuelles.
Les soudures ponctuelles sont réalisées sous la forme d'une pluralité de pontets.
L'assemblage des tôles est effectué par soudage. Toutefois, tout autre procédé d'assemblage des tôles de chacune des deux unités à obtenir, permet également d'obtenir un caisson ouvert sans sortir du principe de la présente invention. La tôle de fond et les tôles latérales de chaque unité peuvent être assemblées soit en chevauchement soit en bout à bout.
Les éléments de montage sont fixés sur l'enveloppe par soudage. Toutefois, tout autre façon de les fixer sur l'enveloppe permet également d'obtenir un caisson ouvert sans sortir du principe de la présente invention.
Le sectionnement de l'enveloppe est effectué par suppression des soudures ponctuelles. Cette suppression est effectuée par exemple au moyen d'un disque coupant ou d'une scie circulaire. En alternative, le sectionnement peut être effectué par dessoudage ou oxycoupage. Ces différents types de mise en oeuvre de l'étape de sectionnement s'appliquent, selon le principe de la présente invention, quelle que soit la disposition des tôles et quel que soit le mode d'assemblage des tôles adjacentes le long du plan médian de l'enveloppe.

L'invention concerne par ailleurs un véhicule industriel comportant un caisson ouvert arrondi obtenu par la mise en oeuvre du procédé décrit ci-avant et un procédé de fabrication d'un tel véhicule industriel.

Les véhicules susceptibles d'être équipés d'un caisson ouvert arrondi obtenu par la mise en oeuvre du procédé de fabrication décrit ci-avant, sont des remorques, des semi-remorques et des camions-porteurs. Sur ces véhicules, les caissons ouverts arrondis sont montés soit en position fixe, soit coulissants sur des rails, soit basculants ou pivotants pour un déchargement par bennage latéral ou vers l'arrière. Les caissons sont montés sur le châssis du véhicule moyennant les éléments de montage fixés sur le caisson et moyennant des éléments de montage complémentaires fixés sur le châssis.

Selon une variante, il est également concevable de fabriquer des véhicules industriels de l'invention sans châssis. En ce cas, les caissons sont pourvus de berces destinées à recevoir le (ou les) essieu(x).

Le procédé de fabrication d'un tel véhicule industriel comprend au moins les étapes du procédé de fabrication d'un caisson ouvert arrondi selon la description donnée plus haut.

L'invention est décrite ci-après par rapport aux dessins qui montrent à titre d'exemple d'un mode de réalisation du procédé de l'invention, une benne dans les différentes étapes de fabrication et un véhicule la comportant.

La Figure 1 représente une disposition de plusieurs tôles formant une enveloppe cylindrique.

La Figure 2 représente l'enveloppe de la Figure 1, pourvue d'une coupelle, de berceaux et de caisses pour un montage basculant.

La Figure 3 représente un caisson ouvert arrondi avec une seule extrémité arrondie.

La Figure 4 représente un corps cylindrique fermé à partir duquel sont obtenus deux caissons ouverts arrondis avec deux extrémités arrondies.

La Figure 5 représente un caisson selon l'invention, dont la section transversale varie de manière linéaire le long de son étendue longitudinale.

La Figure 6 représente un caisson selon l'invention, dont la section transversale varie de manière non linéaire le long de son étendue longitudinale.

La Figure 7 représente un véhicule industriel selon l'invention.

La Figure 8 représente l'extrémité arrière du véhicule industriel de la Figure 7.

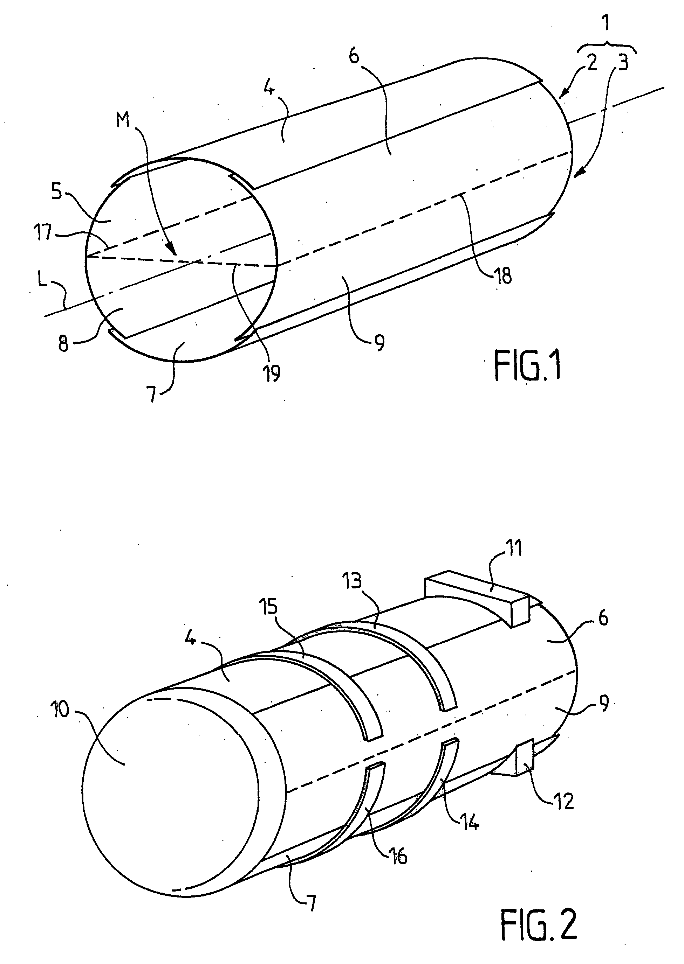

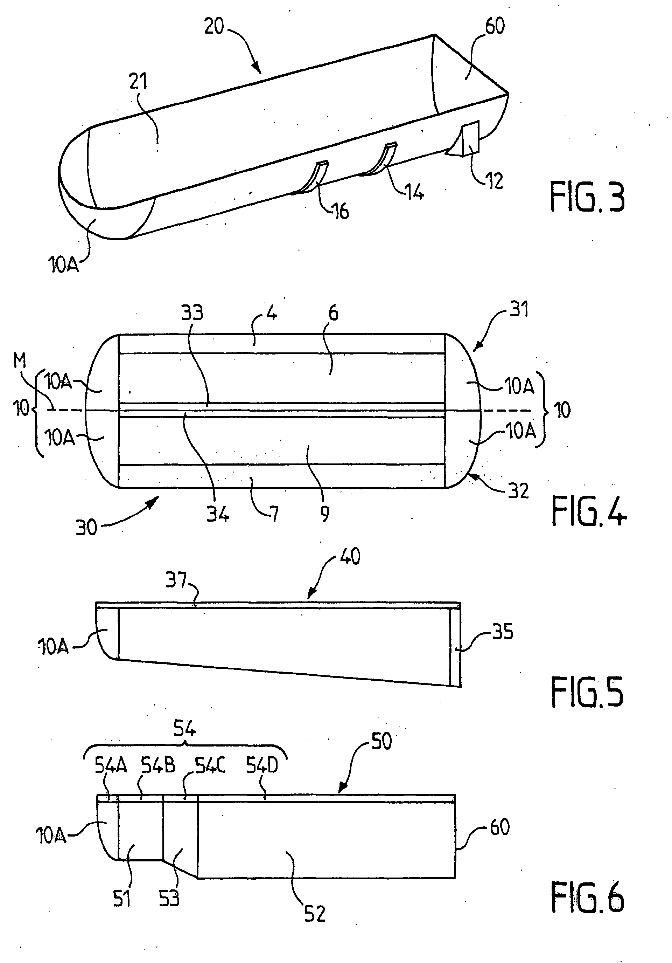

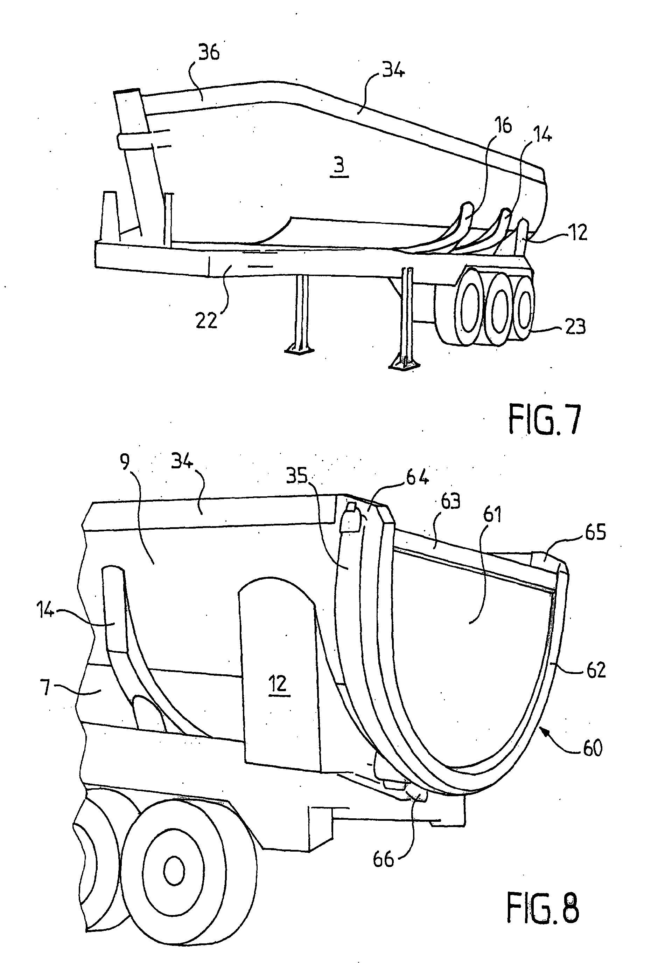

L'enveloppe 1 représentée sur la Figure 1 permet d'obtenir deux unités indépendantes 2, 3 dont l'une est représentée sur la Figure 3. A partie des unités 2 et 3, on fabrique par exemple deux bennes, dont une est représentée sur la Figure 7.

Pour obtenir l'enveloppe 1, on passe d'abord six tôles rectangulaires 4 à 9 dans une rouleuse pour leur donner des rayons prédéterminés. Parmi ces tôles, les tôles 4 et 7 sont destinées à constituer le fond correspondant de chacune des deux bennes à obtenir et les tôles 5, 6 et 8, 9 sont destinées à constituer les parois latérales correspondantes respectivement de l'une et de l'autre des deux bennes à obtenir.

Les deux tôles 5 et 6 sont disposées de part et d'autre de la tôle 4 et avec chevauchement des bords longitudinaux correspondants et fixées par soudage. Ensuite, on fixe les tôles 8 et 9 adjacentes aux tôles 5, 6 en attachant les tôles correspondantes de chaque côté, l'une à l'autre, bout à bout, au moyen d'une pluralité de soudures ponctuelles. Les soudures ponctuelles, qui sont réalisées sous la forme de pontets, sont représentées sur la Figure 1 par des lignes interrompues 17, 18. Enfin, on dispose la tôle 7 avec chevauchement de ses deux bords longitudinaux respectivement avec l'une et l'autre des tôles 8 et 9, et on a fixe sur ces deux tôles de soudage.

Lorsque l'enveloppe cylindrique 1 est constituée, on ferme l'une de ses extrémités par soudage d'une coupelle 10 sur cette extrémité.

Le soudage des tôles entre elles et le soudage de la coupelle sur l'enveloppe cylindrique sont effectués au moyen de têtes de soudage automatisées se déplaçant le long des tôles dans le sens de l'axe longitudinal de l'enveloppe cylindrique et sur le pourtour de l'enveloppe cylindrique le long du bord circonférentiel sur lequel est soudé la coupelle 10.

Lors de l'assemblage des tôles entre elles, les tôles sont tenues dans une telle position qu'une tête de soudage puisse se déplacer horizontalement, d'un bout à l'autre d'une tôle à souder.

Lorsque l'enveloppe cylindrique est constituée, le soudage de la coupelle sur une des extrémités de l'enveloppe est effectué en tournant l'enveloppe et en faisant défiler le pourtour de l'extrémité de l'enveloppe cylindrique devant une tête de soudage automatique.

De manière correspondante, si une utilisation particulière des caissons à obtenir le rend nécessaire ou si pour des raisons esthétiques cela est souhaité, on effectue des travaux tels des travaux de lissage de la paroi intérieure ou extérieure de l'enveloppe. A cette fin, l'enveloppe est tournée autour de son axe longitudinal, par exemple, de façon que consécutivement chacune des soudures à araser est dans une position basse afin qu'une machine, par exemple une meule électrique, puisse être conduite aisément à la main ou automatiquement par un dispositif approprié, le long de cette soudure. De façon correspondante, l'enveloppe est tournée lorsqu'il s'agit d'araser la soudure de la coupelle sur l'enveloppe.

Lorsque l'enveloppe 1 est constituée et les travaux éventuels de finition sont terminés, une paire de caisses 11, 12 est fixée sur cette enveloppe dans des positions opposées et symétriques par rapport à un plan médian M passant par l'axe longitudinal L de l'enveloppe. Les caisses 11 et 12 font partie des éléments de montage au moyens desquels les caissons 2 et 3 sont montés pivotant sur des châssis de véhicules industriels. De manière correspondante, deux paires de berceaux 13, 14 et 15, 16 sont disposées et fixées sur l'enveloppe 1 dans des positions opposées, symétriques par rapport au plan médian M. Le plan médian M est représenté sur la Figure 1 par l'ensemble formé par les lignes 17, 18 et deux lignes les reliant dont on ne voit que la ligne 19.

Pour fixer les caisses et les berceaux sur l'enveloppe, comme cela est représenté sur la Figure 2, on fixe avantageusement d'abord la caisse 11 et les berceaux 13 et 15, on tourne l'enveloppe d'un demi-tour et on fixe ensuite la caisse 12 et les berceaux 14 et 16. Habituellement, mais non exclusivement, les caisses et les berceaux sont fixés sur l'enveloppe par soudage. Le soudage peut être effectué au moyen de têtes de soudage automatiques soudant les berceaux un par un ou les berceaux du même côté simultanément, en tournant l'enveloppe, sur laquelle la caisse et les berceaux sont provisoirement attachés, devant la ou les têtes de soudage.

Après avoir équipé l'enveloppe des caisses et des berceaux, on sectionne l'enveloppe cylindrique et la coupelle le long du plan médian M pour obtenir deux unités indépendantes 2, 3 qui constituent alors deux caissons ouverts arrondis. Chacun de ces caissons comprend alors trois tôles et une demi-coupelle 10A.

Si les deux paires de tôles adjacentes destinées à constituer les parois latérales des bennes, sont attachées les unes aux autres, le long du plan médian M, par des soudures ponctuelles constituant des pontets, ces pontets sont supprimés par un disque coupant tenu à une hauteur adéquate et passés horizontalement, dans le plan médian, autour de l'enveloppe 1.

L'unité indépendante représentée sur la Figure 3 est une variante de celles représentées sur les Figures 1 et 2. En effet, l'unité indépendante 20 est un caisson réalisé à partir d'une tôle unique 21. Ce caisson 20 comprend une demi-coupelle 10A fixée à une de ses deux extrémités.

Les unités indépendantes 2, 3 ou 20 ainsi obtenues sont ensuite équipées d'éléments spécifiques correspondant à leur utilisation prévue. Ainsi, par exemple, l'extrémité opposée à celle pourvue de la demi-coupelle 10A, est équipée d'une porte hydraulique, d'une porte oscillante ou d'une porte ayant deux vantaux. Sur les Figures 3, 6 et 8, ces portes sont référencées indifféremment 60. Un autre élément est par exemple une rive sous la forme d'un bord renforcé 54 ou d'un bord particulièrement conçu 33 ou 34, soudé sur les tôles 8, 9 constituant les parois latérales, selon les bords initialement situés dans le plan médian de l'enveloppe. Encore un autre élément est une rive 36 soudée sur le bord de la demi-coupelle 10A à l'extrémité avant et/ou arrière d'un caisson. D'autres éléments peuvent concerner le montage de la benne sur un châssis et le montage de la benne, sans châssis ou avec un châssis 22, sur un ou plusieurs essieux 23 dans la construction d'une remorque ou d'une semi-remorque.

Les Figures 7 et 8 montrent une semi-remorque équipée d'un caisson 3 selon l'invention. Le caisson 3 comprend une caisse 12 pour le montage pivotant du caisson, des berceaux 14, 16 pour l'appui du caisson sur le châssis 22, des rives 34, 36 constituant un bord supérieur renforcé du caisson, un bord arrière renforcé 35, ainsi qu'une porte 60. La porte 60 s'appuie sur le bord 35 lorsqu'elle est fermée.

La porte 60 comprend une tôle courbe 61 constituant le vantail unique de cette porte oscillante. La tôle 61 est entourée par un bord 62 fixé sur le bord courbe de la tôle et un bord 63 renforçant le bord supérieur droit de la tôle. La porte 60 est montée basculant, moyennant des articulations 64, 65, sur les extrémités supérieures du bord 35 du caisson.

Compte tenu de la forme courbe de la tôle 61, une façon avantageuse de réalisation de ces portes consiste à former une tôle couvrant l'extrémité non arrondie du corps cylindrique, à la passer par une rouleuse pour lui donner la courbure souhaitée et de l'entourer avec un profilé destiné à constituer le bord 62. Le couvercle ainsi obtenu est fixé provisoirement sur l'extrémité du corps cylindrique et est divisé en deux parties en même temps que le corps cylindrique. Les deux parties respectives formant les portes oscillantes de deux caissons, sont complétées avec des profilés 63 constituant le bord supérieur de chacune des portes 60 et d'articulations 64, 65. Ensuite, un mécanisme de verrouillage 66 de la porte est monté sur le caisson. Lorsque ces travaux sont faits, la fixation provisoire des portes sur le caisson respectif est enlevée.

La réalisation des portes d'un caisson de l'invention selon la description ci-avant facilite le cintrage de la tôle du vantail unique de la porte et permet en même temps un montage simple et exact de la porte, et notamment du mécanisme de verrouillage, par rapport au caisson.

Dans la description ci-avant, la mise en oeuvre du procédé de l'invention a été expliquée en référence à une benne arrondie issue d'une enveloppe cylindrique dont seulement une des extrémités a été fermée par une coupelle. Toutefois, le procédé de l'invention peut être mis en oeuvre de manière correspondante lorsqu'il s'agit de fabriquer des caissons 31, 32 selon la Figure 4, issues d'une enveloppe cylindrique 30 dont les deux extrémités ont été fermées par une coupelle 10. Une telle variante de la mise en oeuvre du procédé de l'invention est concevable pour la fabrication de bennes pouvant être pivotées autour d'un axe longitudinal du véhicule industriel et pour la fabrication de caissons destinés à équiper des véhicules industriels non destinés au bennage.

Les caissons 31, 32 ressemblent aux caissons 2 et 3 décrits plus haut en ce que chacun des caissons est formé à partir d'une tôle de fond 4 ou 7 et deux tôles latérales 5, 6 ou 8, 9. Les deux extrémités de chacun des caissons sont constituées par des demi-coupelles 10A.

Par ailleurs, la Figure 4 montre une variante de montage des rives des caissons, applicable de manière correspondante à tout caisson que l'on réalise selon le procédé de l'invention. Au lieu de poser et fixer des rives sur les caissons après avoir séparé le corps fermé en deux unités indépendantes, on fixe des profilés 33, 34 sur des tôles appropriées avant la constitution du corps fermé. Ainsi, les profilés 33, 34 sont fixés en temps utile sur les bords des tôles latérales 5, 6 et 8, 9 destinés à être disposés tête-bêche le long du plan médian M. Lors de l'assemblage des tôles pour former le corps fermé cylindrique, on attache les tôles disposées de part et d'autre du plan médian par les faces en regard moyennant une soudure provisoire de maintien, par exemple moyennant des soudures ponctuelles 17, 18. Lors de la division du corps fermé 30 en les deux unités indépendantes 31, 32, les rives 33, 34 sont séparées par une découpe analogue à celle décrite plus haut par rapport aux unités 2, 3.

Sans sortir du cadre de la présente invention, la variante de réalisation décrite ci-avant peut être rendue encore plus intéressante par l'utilisation d'un profilé double dont les deux parties sont réunies par une lame fine destinée à être supprimée lors de la division du corps fermé 30 en les deux unités 31, 32.

L'invention s'applique également à des véhicules industriels ayant un caisson ouvert arrondi, et au caisson correspondant lui-même, dont la section transversale varie de manière linéaire ou non-linéaire le long de l'étendue longitudinale du caisson. Ces applications sont représentées sur les Figures 5 et 6, qui montrent respectivement un caisson semi-tronconique 40 et un caisson 50 ayant un fond étagé.

Le caisson semi-tronconique 40 est obtenu par le biais d'un corps tronconique constitué par des tôles ayant approximativement la forme d'un trapèze. Le bord supérieur du caisson 40 est pourvu d'une rive 37 et le bord arrière formant l'extrémité opposée à l'extrémité arrondie pourvue de la demi-coupelle 10A, est pourvu d'un bord renforcé 35.

Le caisson à fond étagé 50 est constitué de deux parties semi-cylindriques 51, 52 de rayons différents, entre lesquelles est interposée une partie semi-tronconique 53 formée avec des tôles ayant approximativement la forme d'un trapèze. Le bord supérieur du caisson 50 est pourvu d'une rive 54. Cette rive 54 comprend des rives partielles 54A, 54B, 54C, 54D dont les dimensions et la forme sont déterminées en fonction des dimensions et des formes des parties semi-cylindriques 51, 52 et semi-tronconique 53 et de la demi-coupelle 10A.

L'invention s'applique par ailleurs également à la fabrication de véhicules industriels exempts de châssis. Le caisson ouvert arrondi selon l'invention est alors pourvu directement d'au moins un essieu. Lorsque le véhicule industriel sans châssis est un camion-porteur, celui-ci est avantageusement un véhicule à traction avant.

## Revendications

1. Procédé de fabrication d'un caisson ouvert arrondi pour un véhicule industriel **caractérisé par** les étapes:
former une enveloppe (1, 30) ayant un axe longitudinal (L) et deux extrémités ouvertes,
fermer l'une au moins des extrémités de l'enveloppe par fixation d'une coupelle (10) sur cette extrémité,
fixer au moins une paire d'éléments de montage (11, 12) sur l'enveloppe cylindrique dans des positions symétriques par rapport à un plan médian (M) de l'enveloppe (1, 30) passant par l'axe longitudinal (L) de l'enveloppe,
sectionner l'enveloppe (1, 30) et la coupelle (10) le long du plan médian (M) pour obtenir deux unités indépendantes (2, 3;31, 32) constituant alors deux caissons ouverts arrondis.

2. Procédé selon la revendication 1, **caractérisé en ce que** l'enveloppe (1, 30) est obtenue par assemblage de plusieurs tôles (4-9) disposées en deux groupes de part et d'autre du plan médian, correspondant aux deux unités (2, 3; 31, 32) à obtenir, aucune tôle ne passant par le plan médian (M).

3. Procédé selon la revendication 1, **caractérisé en ce que** l'enveloppe (1) est obtenue par assemblage, pour chacune des deux unités à obtenir, d'une tôle de fond avec deux tôles latérales de part et d'autre de la tôle de fond, les tôles latérales de l'une des unités étant adjacente aux tôles latérales correspondantes de l'autre unité le long du plan médian (M) de l'enveloppe cylindrique.

4. Procédé selon la revendication 2 ou 3, **caractérisé en ce que** les tôles correspondantes (5, 8, 6, 9) des deux unités, qui sont adjacentes au plan médian (11) de l'enveloppe cylindrique, sont attachées les unes aux autres par des soudures ponctuelles.

5. Procédé selon la revendication 4, **caractérisé en ce que** les soudures ponctuelles sont réalisées sous la forme d'une pluralité de pontets (17, 18).

6. Procédé selon l'une quelconque des revendications précédentes, **caractérisé en ce que** l'assemblage des tôles (4-9) est effectué par soudage.

7. Procédé selon l'une quelconque des revendications précédentes, **caractérisé en ce que** les éléments de montage (11-16) sont fixés sur l'enveloppe cylindrique par soudage.

8. Procédé selon l'une quelconque des revendications précédentes, **caractérisé en ce que** le sectionnement de l'enveloppe (1, 30) est effectué par suppression des soudures ponctuelles.

9. Véhicule industriel comportant un caisson ouvert arrondi, **caractérisé en ce que** le caisson a été obtenu par la mise en oeuvre du procédé selon l'une quelconque des revendications 1 à 8.

10. Véhicule industriel selon la revendication 9, **caractérisé en ce que** le caisson (3) ouvert arrondi est monté comme une benne.

11. Procédé de fabrication d'un véhicule industriel comportant un caisson ouvert arrondi, **caractérisé en ce qu'**il comprend les étapes du procédé de fabrication d'un caisson ouvert arrondi selon l'une quelconque des revendications 1 à 8, une étape de fixation d'éléments de montage complémentaires sur un châssis du véhicule industriel et une étape de montage du caisson ouvert arrondi sur ce châssis.
